# EUROPÄISCHE PATENTSCHRIFT

(11) **EP 4 037 927 B1**
(45) Veröffentlichungstag und Bekanntmachung des Hinweises auf die Patenterteilung: **19.07.2023**
(21) Anmeldenummer: 20785483.7
(22) Anmeldetag: 29.09.2020
(51) Int. Cl.: H01H 13/85, H01H 3/32, B60K 37/06

(54) **BEDIENVORRICHTUNG FÜR EIN FAHRZEUG**
OPERATING DEVICE FOR A VEHICLE
DISPOSITIF DE COMMANDE D'UN VÉHICULE

(30) Priorität: 30.09.2019 DE 102019126321
(43) Veröffentlichungstag der Anmeldung: 10.08.2022
(73) Patentinhaber: Behr-Hella Thermocontrol GmbH, 59557 Lippstadt (DE)
(72) Erfinder: KLEINE-HOLLENHORST, Holger, 59557 Lippstadt (DE); ARENS, Michael, 74670 Forchtenberg-Ernsbach (DE)
(74) Vertreter: dompatent von Kreisler Selting Werner - Partnerschaft von Patent- und Rechtsanwälten mbB
(86) Internationale Anmeldenummer: PCT/EP2020/077225
(87) Internationale Veröffentlichungsnummer: WO 2021/063944

(56) Entgegenhaltungen:
- WO-A1-2004/055846
- US-A1- 2008 316 064
- US-A1- 2012 044 660

## Beschreibung

Die Erfindung betrifft eine Bedienvorrichtung für ein Fahrzeug und insbesondere für eine Fahrzeugkomponente wie beispielsweise eine Klimaanlage, ein Navigationsgerät, ein Infotainmentsystem. Insbesondere betrifft die Erfindung ein Mensch-Maschine-Interface (HMI) für ein Fahrzeug.

Bedienvorrichtungen für Fahrzeuge sind entsprechend unterschiedlicher Bedienkonzepte konstruiert und ausgelegt. Bei Bedienvorrichtungen mit Bedientasten ist es mitunter wünschenswert, den Tastenhub so gering wie möglich zu halten (sogenannte Kurzhubtaster). Insbesondere ist man bestrebt, bei der Fertigung von Bedienvorrichtungen dafür zu sorgen, dass niederdrückbare Bedienelemente wie z.B. Bedientasten oder auch niederdrückbare Displays mit Touchfunktion trotz gegebener Fertigungstoleranzen die geforderten, insbesondere identischen Hübe bis zum Erreichen der dem Bedienelement zugeordneten Schalterauslöseposition zurücklegen. Dies ist insbesondere bei Kurzhubtastern anspruchsvoll.

Bedienvorrichtungen, bei denen der Niederdrückhub der Bedienelemente einstellbar ist, sind in US-B-6 919 522 und US-A-2008/0316064 beschrieben. Bei diesen beiden bekannten Bedienvorrichtungen befinden sich an den Bedientasten Einstellschrauben zur Einstellung der Schaltwege.

In US-A-2012/0044660 ist eine Bedienvorrichtung beschrieben, bei der sich ein einer Bedientaste zugeordneter Schalter auf einer flexiblen Leiterkarte befindet, die mittels einer Einstellschraube in Richtung auf das Bedienelement bewegbar ist, um den Schaltweg einzustellen. Die bekannte Bedienvorrichtung weist ein Gehäuse mit einer Vorderwand und mindestens ein Bedienelement auf, das ausgehend von einer Ruheposition zwecks Eingabe eines Befehls oder zwecks Aktivierung einer Funktion manuell betätigbar ist. Dem Bedienelement ist ein Schalter mit einem Schaltorgan zugeordnet, auf das das Bedienelement bei manueller Betätigung einwirkt. Mit Abstand zum Bedienelement ist im Gehäuse ein Trägerelement in Form der Leiterkarte angeordnet, wobei der dem Bedienelement zugeordnete Schalter an dem Trägerelement montiert ist. Ferner weist die bekannte Bedienvorrichtung ein auf das Trägerelement einwirkendes Einstellorgan zur Einstellung der Position des Trägerelements relativ zum Bedienelement in dessen Ruheposition und zum Beibehalten und damit Stabilisierung des Trägerelements in seiner eingestellten Biegeposition bei Einwirkung des Bedienelements auf das Schaltorgan auf.

DE-U-78 25 480 zeigt Kurzhubtaster mit einstellbarem Hub. Dabei kann der Hub zwischen Bereichsfläche und Zungen und damit ein bestimmter Kontaktabstand durch Wahl der Übersetzung eingestellt werden.

Aus EP-A-3 020 896 ist eine Justagevorrichtung für ein Tastelement beschrieben. Damit ist eine Feineinstellung der Ruheposition des Tastelements möglich.

Aufgabe der Erfindung ist es, eine Bedienvorrichtung für ein Fahrzeug zu schaffen, deren Konstruktion die toleranzausgleichende Justage der Schalterauslöseposition erlaubt, und zwar auf einfach Art und Weise.

Zur Lösung dieser Aufgabe wird mit der Erfindung eine Bedienvorrichtung für ein Fahrzeug vorgeschlagen, die versehen ist mit
- einem Gehäuse mit einer Vorderwand,
- mindestens einem Bedienelement, das ausgehend von einer Ruheposition zwecks Eingabe eines Befehls oder zwecks Aktivierung einer Funktion manuell betätigbar ist,
- einem Schalter, der dem Bedienelement zugeordnet ist, mit einem Schaltorgan, auf das das Bedienelement bei manueller Betätigung einwirkt,
- einem im Gehäuse mit Abstand zum Bedienelement angeordneten Trägerelement,
- wobei das Trägerelement einen Biegebalken mit einer dem Bedienelement zugewandten Oberseite und einer der Oberseite abgewandten Unterseite aufweist und
- wobei der dem Bedienelement zugeordnete Schalter an dem Biegebalken angeordnet ist und
- einem auf den Biegebalken einwirkenden Einstellorgan zur Einstellung der Biegeposition des Biegebalkens relativ zum Bedienelement in dessen Ruheposition und zum Beibehalten und damit Stabilisieren des Biegebalkens in seiner eingestellten Biegeposition bei Einwirkung des Bedienelements auf das Schaltorgan,
- wobei das Einstellorgan eine Gewindehülse mit einem Innengewinde und eine Einstellschraube mit einem Gewindeschaft in der Ausbildung als gewindefurchende Schraube aufweist, wobei das Innengewinde der Gewindehülse und das Außengewinde des Gewindeschafts der Einstellschraube das gleiche oder im Wesentlichen das gleiche Steigungsmaß aufweisen.

Bei der erfindungsgemäßen Bedienvorrichtung lässt sich die Position des Schalters relativ zu diesem Schalter zugeordneten Bedienelement werkseitig verstellen. Typischerweise sind die den Bedienelementen zugeordneten Schalter auf einer Platine bzw. allgemein ausgedrückt an einem Trägerelement angeordnet, das sich hinter der Vorderwand des Gehäuses in diesem befindet. Auf der Platine sind neben elektrischen Leiterbahnen noch weitere elektrische und elektronische Bauteile angeordnet. Bei den Schaltern kann es sich beispielsweise um Kurzhubschalter oder aber eine auf einer Platine aufliegende Schaltmatte handeln. Auch sind kapazitiv, resistiv, induktiv oder optisch arbeitende Schalter in Form von Sensoren und insbesondere Wegsensoren einsetzbar.

Erfindungsgefäß befindet sich nun der einem Bedienelement zugeordnete Schalter auf einem Biegebalken des Trägerelements. Im Falle der Ausbildung des Trägerelements als Leiterplatine kann dieser Biegebalken als an drei Seiten freigeschnittener Steg ausgebildet sein, dessen eines Ende mit der Leiterplatine einstückig verbunden ist und dessen anderes Ende frei ist. Der Biegebalken kann aber auch als zusätzliches separates Bauteil am Trägerelement angeordnet sein, beispielsweise als Zunge o.dgl. Überstandselement. Auf den Biegebalken wirkt ein Einstellorgan ein, mit dem sich die Position des Biegebalkens verändern lässt. Auch dient das Einstellorgan der Stabilisierung der eingenommenen Biegeposition des Biegebalkens, wenn bei Betätigung des Bedienelements auf das Schaltorgan des Schalters eingewirkt wird und damit über das Schaltorgan oder den Schalter gegebenenfalls Druck auf den Biegebalken ausgeübt wird.

Da sich die Verdrehposition der Einstellschraube trotz auf die Bedieneinheit einwirkender Vibrationen nicht verändern sollte, sollte die Einstellschraube verdrehsicher sein. Bei herkömmlichen Einstellschrauben verwendet man in diesem Zusammenhang einen Kleber oder einen Sicherungslack. Das erfindungsgemäß vorgeschlagene Einstellorgan ist konstruktionsbedingt selbstsichernd. Dies wird realisiert durch die gewindefurchende Schraube in Kombination mit der mit Innengewinde versehenen Gewindehülse. Eine gewindefurchende Schraube weist typischerweise ein Gewinde auf, das über einen Gewindegang von 360° betrachtet mehrere Hochpunkte aufweist. So spricht man bei einer gewindefurchenden Schraube mit z.B. drei Hochpunkten von einer Trilobularform des Gewindeverlaufs. Außerdem ist das Radiusprofil des Gewindes einer gewindefurchenden Schraube in einer Weise ausgebildet, die nicht etwa im Querschnitt dreieckig ist, wie es bei normalen nicht gewindeschneidenden oder nicht gewindefurchenden Schrauben der Fall ist, sondern davon abweichend ist und z.B. in evolventer Form vorliegen kann. Eine solche Schraube wird an sich zur selbstfurchenden Gewindeerzeugung in z.B. einem Sackloch (beispielsweise als gegossene Bohrung erzeugt) eingesetzt. Nach der Erfindung wird für den Gewindeeingriff der gewindefurchenden Schraube eine Gewindehülse mit Innengewinde eingesetzt. Dadurch reduzieren sich die beim Eindrehen der gewindefurchenden Schraube aufzuwendenden Drehmomente, ohne aber auf die Selbsthemmung der Einstellschraube in der angefahrenen Einstellposition verzichten zu müssen.

Das durch die Hochpunkte (sowie deren Anzahl) und durch die Gewindequerschnittsform erzeugte (Außen-)Übermaß der gewindefurchenden Einstellschraube gegenüber dem Innenmaß der Gewindehülse bestimmt sich nach dem Drehmoment, welches für das Einschrauben der gewindefurchenden Einstellschraube in die Hülse und den Selbsthalteeffekt gefordert wird.

Die Feinjustage der gewünschten Schalterauslöseposition kann nun dergestalt erfolgen, dass bei fertig gestellter Bedienvorrichtung das einem Schalter bzw. einem Biegebalken zugeordnete Einstellorgan bei in seiner Ruheposition befindlichem Bedienelement verstellt wird, um den Biegebalken zu verbiegen, so dass der Schalter in Richtung Bedienelement vorbewegt wird. Dieser Vorgang wird so lange fortgesetzt, bis der Schalter bzw. das Schaltorgan des Schalters sich in seiner Schalterauslöseposition befindet. Dabei muss beim Verdrehen der Einstellschraube ein gewisses Mindestdrehmoment überwunden werden. Durch anschließendes Zurückbewegen oder Zurückverstellen des Einstellorgans um ein vorgegebenes Maß kann nun der Biegebalken in eine Biegeposition überführt werden, in der sich dann der Schalter in einem Abstand zum Bedienelement befindet, der dem gewünschten Auslöseweg entspricht, um den das Bedienelement bei Betätigung niedergedrückt werden muss, bis das Schalterorgan die Schalterauslöseposition erreicht ist. Bei in diesem Zusammenhang erfolgendem Zurückdrehen der Einstellschraube ist das aufzubringende Mindestdrehmoment geringer als beim vorherigen Hineinschrauben aber immer noch groß genug, so dass es zu einer Selbsthemmung der Einstellschraube kommt. Damit kann auf Sicherungsmaßnahmen zum Schutz vor einem ungewollten Verdrehen der Einstellschraube durch z.B. Kleber oder Sicherungslack verzichtet werden, was die Montage erleichtert und die Montagekosten senkt.

Die erfindungsgemäß eingesetzte gewindefurchende Einstellschraube wird mitunter auch als selbstfurchende Schraube bezeichnet. Gewindefurchende Schrauben, die sich für den Einsatz als Einstellschraube im Sinne der Erfindung eignen, werden z.B. von der ARNOLD UMFORMTECHNIK GmbH und Co. KG unter der Marke TAPTITE vertrieben.

Bei dem Bedienelement handelt es sich typischerweise um ein Element mit mehreren Schaltflächen und einer Touch-Sensorik (kapazitiv, resistiv, optisch oder induktiv arbeitend). Zur Auslösung eines Befehls, der durch Berührung einer der Schaltflächen des Bedienelements eingegeben wird, dient also stets der eine Schalter.

Das Einstellorgan ist vorzugsweise an einem Referenzelement gelagert bzw. geführt, das eine bezüglich des Trägerelements und dem Bedienelement (in dessen Ruheposition) definierte und gleichbleibende Position aufweist.

Mit anderen Worten ist also, wie oben beschrieben, nach der Erfindung mit Vorteil vorgesehen, dass das Schaltorgan von dem Bedienelement längs eines Schaltwegs bis zu einer Schalterauslöseposition bewegbar ist und dass der Biegebalken mittels des Einstellorgans in eine Biegeposition überführbar und in dieser Biegeposition fixierbar ist, in der der Auslöseweg, um den das Bedienelement bis zum z.B. durch ein Schaltorgan erfolgenden Erreichen der Schalterauslöseposition bewegbar ist, unter Kompensation von Montage- und/oder Fertigungstoleranzen des Gehäuses des Bedienelements und des Schalters, eine vorgebbare Länge aufweist.

Ein weiterer Vorteil der Einstellschraube ist, dass das Maß, um das das Einstellorgan dann, wenn das Schaltorgan bei der Feinjustage des Schalters die Schalterauslöseposition erreicht hat, zurückbewegt wird, bei bekannter Gewindesteigung anhand des Ausmaßes der Verdrehung der Einstellschraube definiert ist und gezielt angefahren werden kann.

Bei einer Ausgestaltung der Erfindung ist mit Vorteil vorgesehen, dass die Gewindehülse mit dem relativ zum Biegebalken des Trägerelements positionierten Referenzelement fest verbunden bzw. integriert ausgeführt ist. Damit kann sich dann durch Verdrehung der Einstellschraube deren Gewindeschaftende in Richtung Biegebalken vorbewegen und diesen verbiegen, wobei der Gewindeschaft bei der Zurückbewegung der Biegebalken aufgrund seiner Elastizität wiederum der Position des Gewindeschaftendes der Einstellschraube folgt. Das den Biegebalken kontaktierende Ende des Gewindeschafts ist zweckmäßigerweise konvex vorgewölbt (also mit einer "Radiusspitze" versehen) ausgebildet, so dass der Gewindeschaft möglichst mit Punktkontakt und damit gleichbleibend definiert über eine volle Umdrehung der Gewindeschraube an dem Biegebalken anliegt.

Alternativ zu dem zuvor Gesagten kann die Einstellschraube auch als "lose Schraube" an dem Referenzelement axial positioniert gehalten sein, wobei in diesem Fall der Gewindeschaft der Einstellschraube im Gewindeeingriff mit der an und/oder in dem Biegebalken fixierten/montierten/integrierten Gewindehülse steht und diesen bidirektional verbiegen kann.

Um bei der Feinjustage des Schalters durch Verbiegen bzw. Zurückverbiegen des Biegebalkens nicht noch Hebelübersetzungsverhältnisse am Biegebalken berücksichtigen zu müssen, ist es von Vorteil, wenn das Einstellorgan auf den Biegebalken an einer Position einwirkt, die in Verlängerung der Bewegung des Schaltorgans bei dessen Betätigung durch das Bedienelement liegt. Bei einseitig am Biegebalken anliegendem Einstellorgan, das bei seiner Verstellung mehr oder weniger stark auf dem Biegebalken einwirkt, um diesen in Richtung Bedienelement zu verbiegen bzw. bei der Zurückbewegung den Biegebalken wieder zu entlasten, ist gemäß einer vorteilhaften Ausgestaltung der Erfindung vorgesehen, dass der Schalter auf der dem Bedienelement zugewandten Oberseite des Biegebalkens angeordnet ist und dass die Einstellschraube, an der der Oberseite abgewandten Unterseite des Biegebalkens und in Flucht mit dem Schalter anliegt.

Mit dem erfindungsgemäßen Konzept ist es möglich, Schaltersysteme im Verbund anzuordnen, so dass ein kurzes Ansprechen des Bedienelements mit Schaltwegen von bis zu kleiner als 0,4 mm ermöglichst wird. Ferner können kleinste Betätigungswege (unter 0,3 mm) umgesetzt werden. Die Toleranz des Schaltersystems in Verbund kann bis auf kleiner als +/- 0,1 mm reduziert werden. Die Toleranzen der Einzelteile (Tastenkörper, Tastenführung am Gehäuse bzw. an der Frontblende, Schalter, Schaltorgan und deren Zusammenbau können kompensiert werden.

In weiterer vorteilhafter Ausgestaltung der Erfindung kann vorgesehen sein, dass die Bedienvorrichtung mit einem haptischen Feedback versehen ist. Es steigert den Bedienkomfort, wenn dem Anwender die Erkennung einer validen Bedienung des Bedienelements signalisiert wird. Dies erfolgt vor allem vorteilhafterweise durch eine taktile Rückmeldung. Ein derartiges haptisches Feedback lässt sich beispielsweise mechanisch, elektromechanisch oder aber auch elektrisch realisieren. Ein mechanisches taktiles Feedback lässt sich dadurch realisieren, dass das Display mittels eines Aktuators impulsartig mechanisch angeregt wird. Eine andere Möglichkeit der Realisierung eines haptischen Feedbacks besteht darin, dass in das Display bzw. in das Abdeckglas des Displays Biegewellen eingeprägt werden. Eine weitere Möglichkeit der Realisierung des haptischen Feedbacks besteht in einer rein elektrisch arbeitenden Variante mittels örtlich erzeugter elektrischer Felder.

Allgemein kann mit dem erfindungsgemäßen Vorschlag für das Einstellorgan die Position eines Detektors relativ zu einem zu detektierenden Element eingestellt werden, wobei der Detektor auf einem Biegebalken angeordnet ist. Bezogen auf das hier beschriebene Ausführungsbeispiel wäre also der Schalter der Detektor und das zu detektierende Element im weitesten Sinne das Bedienelement, dessen Niederdrücken detektiert werden soll. Der Detektor kann auf eine mechanische Berührung reagieren oder aber auch berührungslos fungieren.

Die Erfindung wird nachfolgend anhand eines Ausführungsbeispiels sowie unter Bezugnahme auf die Zeichnung näher erläutert. Im Einzelnen zeigen:
- Fig. 1: eine Vorderansicht (perspektivisch) auf eine Bedienvorrichtung,
- Fig. 2: einen Schnitt durch die Bedienvorrichtung gemäß II-II der Fig. 1,
- Fig. 3: eine Schnittansicht im Bereich III-III der Fig. 2,
- Fign. 4 bis 7: die einzelnen Phasen bei der Feinjustage des Schaltersystems (bezogen auf ein Bedienelement) und
- Fign. 8 und 9: Darstellungen im Schnitt und in Seitenansicht des gewindefurchenden Gewindeschafts der Einstellschraube.

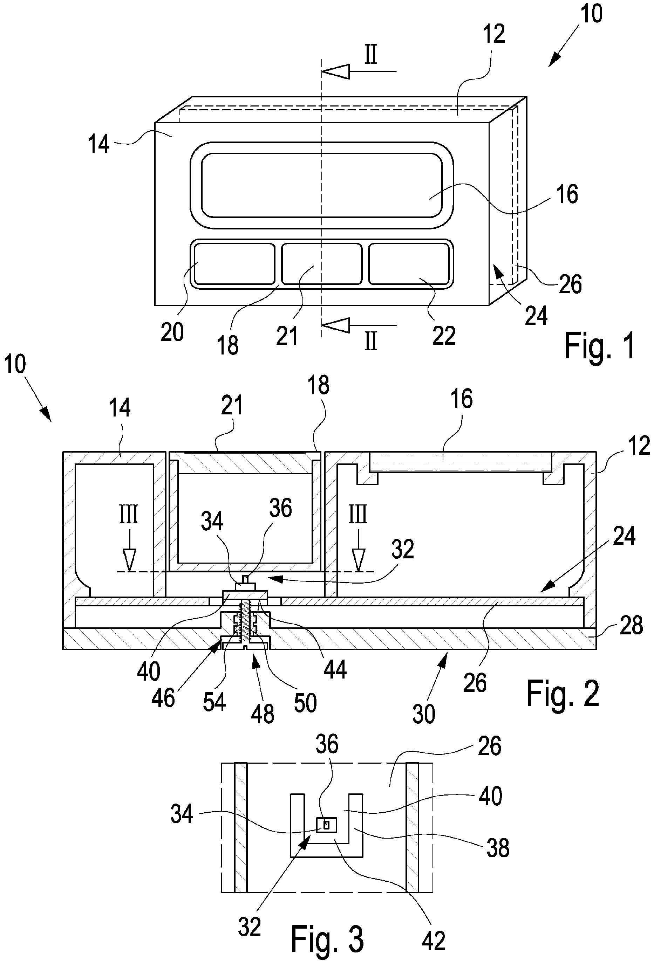

In den Fign. 1 bis 3 ist die grundsätzliche Konstruktion eines Ausführungsbeispiels einer Bedienvorrichtung 10 gezeigt. In diesem Ausführungsbeispiel weist die Bedienvorrichtung 10 ein Gehäuse 12 auf, an dessen Vorderwand 14 sich beispielsweise ein Display 16 sowie ein Bedienelement 18 in Form einer Leiste mit drei Bedienfeldern 20, 21, 22 befinden. Innerhalb des Gehäuses 12 befindet sich ein Trägerelement 24 für diverse elektrische und elektronische Komponenten. Bei diesem Trägerelement 24 handelt es sich typischerweise um eine Leiterplatine 26. Das Gehäuse 12 weist ferner eine Rückwand 28 auf, die in diesem Ausführungsbeispiel auch die Funktion eines Referenzelements 30 ausübt, worauf weiter unten noch eingegangen werden wird.

Gemäß den Schnittansichten der Fign. 2 und 3 befindet sich unterhalb des Bedienelements 18 ein in diesem Ausführungsbeispiel mechanischer Schalter 32, der ein Schaltergehäuse 34 und ein Schaltorgan 36 aufweist. Das Schaltorgan 36 ist in diesem Falle als Stößel ausgebildet, der beim Niederdrücken z.B. ein elektrisch leitendes Element zur elektrischen Verbindung zweier Kontaktfelder bewegt. Bei Betätigung des Bedienelements 18 wird sensorisch (z. B. kapazitiv) erkannt, welches der Bedienfelder 20, 21, 22 mit z. B. einem Finger einer Hand berührt wird, um dann beim Auslösen des Schalters 32 den dem berührten Bedienfeld entsprechenden Befehl auszuführen.

Der Schalter 32 befindet sich in einem Bereich des Trägerelements 24, in dem dieses einen beispielsweise U-förmigen Freischnitt 38 aufweist. Auf diese Weise entsteht ein Biegebalken 40, auf dessen dem Bedienelement 18 zugewandten Oberseite 42 sich der Schalter 32 befindet.

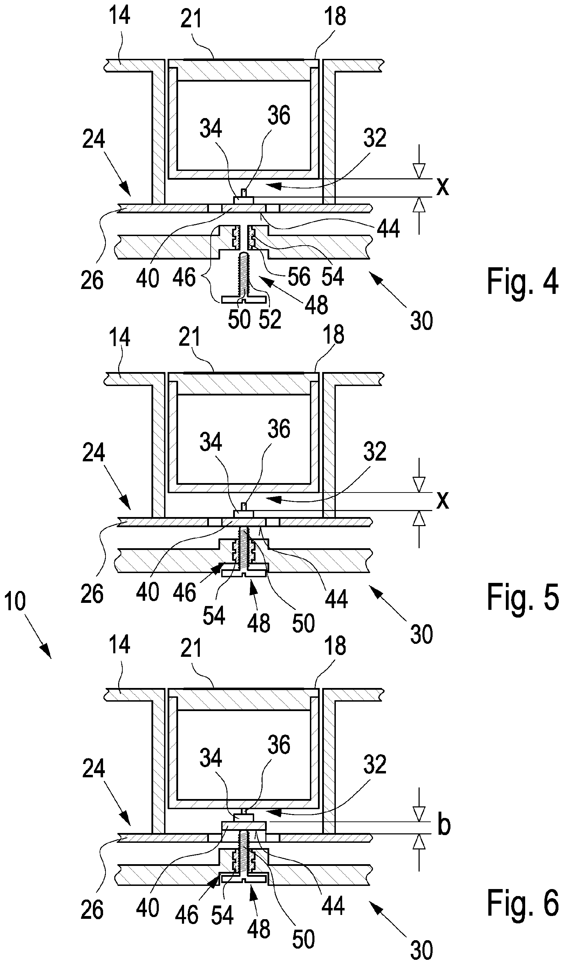

Auf die Unterseite 44 des Biegebalkens 40 wirkt ein Einstellorgan 46 ein, das als gewindefurchende Einstellschraube 48 mit Gewindeschaft 50 und Außengewinde 52 in Kombination mit einer Metall-Gewindehülse 54 mit Innengewinde 56 ausgebildet ist (siehe auch die Fig. 4). Die Einstellschraube 48 weist beispielsweise als Material Stahl auf, während die Gewindehülse 54 aus einem gegenüber dem Material der Einstellschraube 48 "weicheren" Metall wie beispielsweise Messing besteht. Mit ihrem Gewindeschaft 50 ist die Einstellschraube 48 in Gewindeeingriff mit der in die Rückwand 28 eingebetteten Gewindehülse 54. Die Gewindehülse 54 ist von typischerweise Kunststoffmaterial der Rückwand 28 umspritzt und damit spritzgusstechnisch in die Rückwand 28 integriert und weist an ihrer Außenseite eine vergleichsweise große Oberflächenrauigkeit auf (beispielsweise erzeugt durch Rändelung), damit sich das Kunststoffmaterial und die Gewindehülse 54 miteinander verzahnen und damit die Gewindehülse 54 auch bei den erhöhten Drehmomenten, die durch die Paarung aus gewindefurchender Einstellschraube 48 und Gewindehülse 54 beim Hinein- und Herausdrehen der Einstellschraube 48 auftreten, verdrehsicher positioniert ist bzw. bleibt. Vorzugsweise wirkt das insbesondere konvex vorgewölbte Gewindeschaftende 58 der Einstellschraube 48 dem Schalter 32 gegenüberliegend auf die Unterseite des Biegebalkens 40 ein, indem es dort anliegt.

In Fig. 2 ist der Biegebalken 40 in Richtung Bedienelement 18 verbogen, so dass sich der Schalter 32 in der gewünschten Position relativ zur Ruheposition des Bedienelements 18 befindet. Diese Abstandsposition definiert, dass das Bedienelement 18 nach Niederdrücken um den gewünschten Weg den Schalter 32 auslöst. Das Bedienelement 18 ist in bekannter Weise durch z. B. Rast- oder Schnapphaken gegen eine Herausbewegung aus dem Gehäuse 12 gesichert.

Die Vorgehensweise für die erfindungsgemäße Feinjustage des Schaltersystems aus Bedienelement 18 und zugeordnetem Schalter 32 wird nachfolgend anhand der Fign. 4 bis 7 kurz beschrieben.

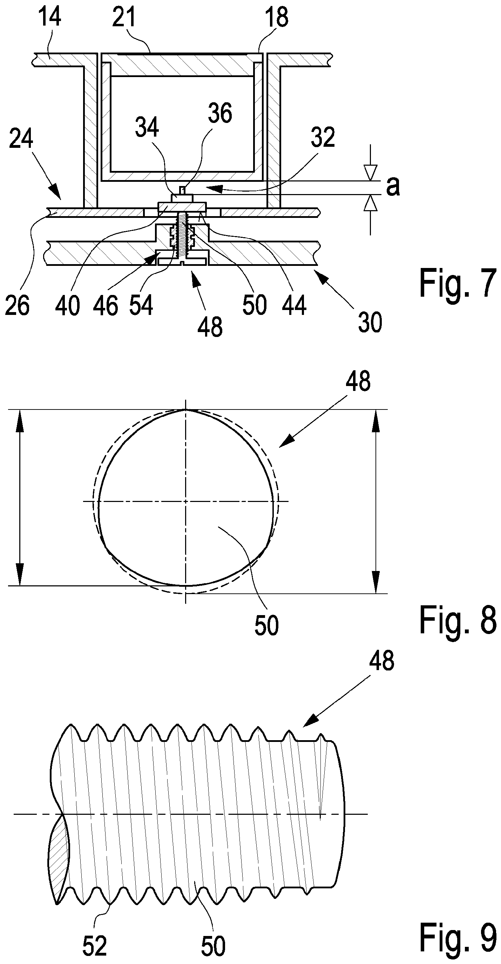

Bei Beginn des Justagevorgangs hat der Schalter 32 (in diesem Fall das Schaltergehäuse 34) zur Unterseite des in Ruheposition befindlichen Bedienelements 18 den Abstand x (siehe Fign. 4 und 5), der größer ist als der gewünschte Auslöseweg a (siehe Fig. 7). Mittels der Einstellschraube 48 wird nun der Biegebalken 40 in Richtung Bedienelement 18 verbogen, wodurch der Schalter 32 gegen die Unterseite des Bedienelements 18 bewegt wird. Hierbei muss die Einstellschraube 48 unter Überwindung eines gewissen Mindestdrehmoments in die Gewindehülse 54 eingeschraubt bzw. mit dieser verschraubt werden. Nach dem Zurücklegen des Verstell-bzw. Verbiegeweges b löst der Schalter 32 aus (siehe Fig. 5). Das Schaltsignal wird z.B. über eine Geräte-Test-Schnittstelle am Ende der Montage der Bedienvorrichtung 10 eingelesen, wodurch die weitere Betätigung der Einstellschraube 48, was beispielsweise automatisch erfolgt, beendet wird. Nun ist bekannt, wann der Schalter 32 auslöst.

In dieser Situation ist das Schaltersystem im geschalteten Zustand und ohne Spiel in der Bedienvorrichtung angeordnet. Anzumerken ist dabei, dass der Schalter 32 nicht auf Blockmaß zusammengefahren sein sollte; dies dient dem mechanischen Schutz des Schalters 32.

Mit anderen Worten ist also dann, wenn die Situation gemäß Fig. 5 vorliegt, bekannt, wo der Schaltpunkt (spielfrei) des Schalters 32 im System liegt.

Im Umkehrschluss lässt sich nun mit einer gezielten Rückstellung der Einstellschraube 48 (, deren Gewindesteigungsmaß bekannt ist,) spielfrei ein genauer Schaltweg (Auslöseweg) des Schaltersystems einstellen. Mit dieser Zurückstellung der Einstellschraube 48 durch deren Zurückverdrehen wird der Schalter 32 in seine Endposition gebracht, in der beim Niederdrücken des Bedienelements 18 das Schaltorgan 36 des Schalters 32 bis in die Schalterauslöseposition und damit das Bedienelement 18 um den Auslöseweg a bewegt ist (siehe Fig. 7). Das Zurückdrehen der Einstellschraube 48 erfolgt wiederum unter Überwindung eines Mindestdrehmoments, das geringer ist als beim vorherigen Einschrauben aber ausreichend groß ist, so dass eine zuverlässige Selbsthemmung in der End-Einstellposition der Einstellschraube 48 gegeben ist.

Ein Beispiel für die Form der gewindefurchenden Einstellschraube 48 ist in den Fign. 8 und 9 gezeigt. Danach weist die Einstellschraube 48 eine Trilobularform auf, was ihren Querschnitt betrifft. Das Gewindeschaftende 58 ist leicht konisch ausgeführt und weist ein Zentrier- bzw. Führungsgewinde auf, das nicht notwendigerweise Trilobularform aufweist. Eine gewindefurchende Einstellschraube mit Trilobularform ist beispielsweise im Handel z. B. unter TAPTITE 2000 oder DUO TAPTITE 2000 bekannt.

Im Weiteren stabilisiert also das Einstellorgan 46 den Biegebalken 40 in dessen nach der Justage eingenommenen Biegeposition.

Mit dem zuvor beschriebenen Verfahren und der zuvor Bedienvorrichtungskonstruktion bzw. dem Schaltersystem aus Bedienelement 18 und Schalter 32 sowie Biegebalken 40 ist es möglich, die Toleranzkette dieses mechanischen "Verbundsystems" auf null zu reduzieren. Es können kleine Schaltwege trotz hoher Bauteiltoleranzen und große Toleranzketten im Verbund ausgeglichen werden.

### BEZUGSZEICHENLISTE

- 10: Bedienvorrichtung
- 12: Gehäuse
- 14: Vorderwand
- 16: Display
- 18: Bedienelement
- 20: Bedienfeld
- 21: Bedienfeld
- 22: Bedienfeld
- 24: Trägerelement
- 26: Leiterplatine
- 28: Rückwand
- 30: Referenzelement
- 32: Schalter
- 34: Schaltergehäuse
- 36: Schaltorgan
- 38: Freischnitt
- 40: Biegebalken
- 42: Oberseite
- 44: Unterseite
- 46: Einstellorgan
- 48: Einstellschraube
- 50: Gewindeschaft
- 52: Außengewinde des Gewindeschafts
- 54: Gewindehülse
- 56: Innengewinde der Gewindehülse
- 58: Gewindeschaftende
- x: Abstand
- a: Auslöseweg
- b: Verbiegeweg

## Patentansprüche

1. Bedienvorrichtung (10) für ein Fahrzeug, mit
- einem Gehäuse (12) mit einer Vorderwand (14),
- mindestens einem Bedienelement (18), das ausgehend von einer Ruheposition zwecks Eingabe eines Befehls oder zwecks Aktivierung einer Funktion manuell betätigbar ist,
- einem Schalter (32), der dem Bedienelement (18) zugeordnet ist, mit einem Schaltorgan (36), auf das das Bedienelement (18) bei manueller Betätigung einwirkt,
- einem im Gehäuse (12) mit Abstand zum Bedienelement (18) angeordneten Trägerelement (24),
- wobei das Trägerelement (24) einen Biegebalken (40) mit einer dem Bedienelement (18) zugewandten Oberseite (42) und einer der Oberseite (42) abgewandten Unterseite (44) aufweist,
- wobei der dem Bedienelement (18) zugeordnete Schalter (32) an dem Biegebalken (40) angeordnet ist, und
- einem auf den Biegebalken (40) einwirkenden Einstellorgan (46) zur Einstellung der Biegeposition des Biegebalkens (40) relativ zum Bedienelement (18) in dessen Ruheposition und zum Beibehalten und damit Stabilisieren des Biegebalkens (40) in seiner eingestellten Biegeposition bei Einwirkung des Bedienelements (18) auf das Schaltorgan,
- wobei das Einstellorgan (46) eine Gewindehülse (54) mit einem Innengewinde (56) und eine Einstellschraube (48) mit einem Gewindeschaft (50) in der Ausbildung als gewindefurchende Schraube aufweist, wobei das Innengewinde (56) der Gewindehülse (54) und das Außengewinde (52) des Gewindeschafts (50) der Einstellschraube (48) das gleiche oder im Wesentlichen das gleiche Steigungsmaß aufweisen.

2. Bedienvorrichtung (10) nach Anspruch 1, **dadurch gekennzeichnet, dass** die Gewindehülse (54) an und/oder in einem relativ zu dem Biegebalken (40) des Trägerelements (24) positionierten Referenzelement (30) angeordnet ist und dass beim Verdrehen der gewindefurchenden Einstellschraube (48) das Ende von dessen Gewindeschaft (50) an dem Biegebalken (40) anliegt und zum Verbiegen des Biegebalkens (40) auf diesen einwirkt.

3. Bedienvorrichtung (10) nach Anspruch 2, **dadurch gekennzeichnet, dass** das Ende der gewindefurchenden Einstellschraube (48) konvex gewölbt ausgebildet ist und/oder dass die Gewindehülse (54) mittels Formschluss verdrehsicher gehalten ist.

4. Bedienvorrichtung (10) nach Anspruch 1, **dadurch gekennzeichnet, dass** der Gewindeschaft (50) der gewindefurchenden Einstellschraube (48) an und/oder in einem relativ zum Biegebalken (40) des Trägerelements (24) positionierten Referenzelement (30) drehbar und axial gehalten ist, dass die Gewindehülse (54) an und/oder in dem Biegebalken (40) angeordnet ist und dass bei Verdrehung der gewindefurchenden Einstellschraube (48) der Biegebalken (40) verbiegbar ist.

5. Bedienvorrichtung (10) nach einem der Ansprüche 1 bis 4, **dadurch gekennzeichnet, dass** der Schalter (32) ein von dem Bedienelement (18) längs eines Schaltwegs bis zu einer Schalterauslöseposition bewegbares Schaltorgan (36) aufweist und dass der Biegebalken (40) mittels der gewindefurchenden Einstellschraube (48) in eine Biegeposition überführbar und in dieser Biegeposition fixierbar ist, in der der Schaltweg eine vorgebbare Länge aufweist, und zwar unter Kompensation von Montage- und/oder Fertigungstoleranzen des Gehäuses (12), des Bedienelements (18) und des Schalters (32).

6. Bedienvorrichtung (10) nach einem der Ansprüche 1 bis 5, **dadurch gekennzeichnet, dass** der Schalter (32) mindestens zwei in einer Schalterauslöseposition elektrisch verbundene Kontakte aufweist oder dass der Schalter (32) als Wegsensor ausgebildet ist, der optisch, kapazitiv, resistiv oder induktiv arbeitet.

7. Bedienvorrichtung (10) nach einem der Ansprüche 1 bis 6, **dadurch gekennzeichnet, dass** die gewindefurchende Einstellschraube (48) auf den Biegebalken (40) an einer Position einwirkt, die in Verlängerung der durch den Schalter (32) verlaufenden Bewegungsachse des Bedienelements (18) des Schaltorgans bei dessen Betätigung liegt.

8. Bedienvorrichtung (10) nach einem der Ansprüche 1 bis 7, **dadurch gekennzeichnet, dass** der Schalter (32) auf der dem Bedienelement (18) zugewandten Oberseite (42) des Biegebalkens (40) angeordnet ist und dass die gewindefurchende Einstellschraube (48), an der der Oberseite (42) abgewandten Unterseite (44) des Biegebalkens (40) und in Flucht mit dem Schalter (32) anliegt.

9. Bedienvorrichtung nach einem der Ansprüche 1 bis 8, **gekennzeichnet durch** eine elektrisch oder elektromechanisch oder elektromagnetisch arbeitende Rückmeldeeinheit zur taktilen Rückmeldung einer validen manuellen Betätigung des Bedienelements (18).

## Claims

1. An operating device (10) for a vehicle, comprising
- a housing (12) having a front wall (14),
- at least one operating element (18) which can be manually actuated starting from a rest position for the purpose of entering a command or activating a function,
- a switch (32), which is assigned to the operating element (18), having a switching member (36) on which the operating element (18) acts during manual operation,
- a support element (24) arranged inside the housing (12) with a distance to the operating element (18),
- wherein the support element (24) comprises a bending bar (40) with an upper side (42) facing the operating element (18) and a lower side (44) facing away from the upper side (42),
- wherein the switch (32) assigned to the operating element (18) is arranged on the bending bar (40), and
- an adjustment member (46) acting on the bending bar (40) for adjusting the bending position of the bending bar (40) relative to the operating element (18) in its resting position and for maintaining and thus stabilizing the bending bar (40) in its adjusted bending position when the operating element (18) acts on the switching member,
- wherein the adjustment member (46) comprises a threaded sleeve (54) with an internal thread (56) and an adjustment screw (48) with a threaded shaft (50) in the form of a self-tapping screw, wherein the internal thread (56) of the threaded sleeve (54) and the external thread (52) of the threaded shaft (50) of the adjustment screw (48) have the same or substantially the same pitch.

2. The operating device (10) according to claim 1, **characterized in that** the threaded sleeve (54) is arranged on and/or in a reference element (30) positioned relative to the bending bar (40) of the support element (24), and **in that**, when the self-tapping adjustment screw (48) is rotated, the end of its threaded shaft (50) rests against the bending bar (40) and acts thereon to bend the bending bar (40).

3. The operating device (10) according to claim 2, **characterized in that** the end of the self-tapping adjustment screw (48) is formed so as to be convexly curved and/or that the threaded sleeve (54) is held in a rotationally fixed manner by means of a form fit.

4. The operating device (10) according to claim 1, **characterized in that** the threaded shaft (50) of the self-tapping adjustment screw (48) is rotatably and axially held on and/or in a reference element (30) positioned relative to the bending bar (40) of the support element (24), **in that** the threaded sleeve (54) is arranged on and/or in the bending bar (40), and **in that**, when rotating the self-tapping adjustment screw (48), the bending bar (40) is bendable.

5. The operating device (10) according to any one of claims 1 to 4, **characterized in that** the switch (32) has a switching member (36) movable by the operating element (18) along a switching path to a switch triggering position, and **in that** the bending bar (40) can be transferred to a bending position by means of the self-tapping adjustment screw (48) and can be fixed in said bending position, in which the switching path has a predefinable length, while compensating for assembly and/or manufacturing tolerances of the housing (12) of the operating element (18) and of the switch (32).

6. The operating device (10) according to any one of claims 1 to 5, **characterized in that** the switch (32) has at least two contacts electrically connected in a switch triggering position, or **in that** the switch (32) is designed as a displacement sensor which operates optically, capacitively, resistively or inductively.

7. The operating device (10) according to any one of claims 1 to 6, **characterized in that** the self-tapping adjustment screw (48) acts on the bending bar (40) at a position which, when the switching member is actuated, is in extension of the movement axis, extending through the switch (32), of the operating element (18) of the switching member.

8. The operating device (10) according to any one of claims 1 to 7, **characterized in that** the switch (32) is arranged on the upper side (42) of the bending bar (40) facing the operating element (18), and **in that** the self-tapping adjustment screw (48) rests against the lower side (44) of the bending bar (40) facing away from the upper side (42) and in alignment with the switch (32).

9. The operating device according to any one of claims 1 to 8, **characterized by** an electrically or electromechanically or electromagnetically operating feedback unit for tactile feedback of a valid manual actuation of the operating element (18).

## Revendications

1. Dispositif de commande (10) pour véhicule, doté
- d'un boîtier (12) avec une paroi avant (14),
- d'au moins un élément de commande (18), lequel est manuellement actionnable à partir d'une position de repos afin d'entrer un ordre ou afin d'activer une fonction,
- d'un commutateur (32), lequel est associé à l'élément de commande (18), avec un organe de commutation (36) sur lequel opère l'élément de commande (18) en cas d'actionnement manuel,
- d'un élément porteur (24) disposé dans le boîtier (12) à distance de l'élément de commande (18),
- dans lequel l'élément porteur (24) comporte une poutre de flexion (40) avec une face supérieure (42) tournée vers l'élément de commande (18) et une face inférieure (44) se détournant de la face supérieure (42),
- dans lequel le commutateur (32) associé à l'élément de commande (18) est disposé sur la poutre de flexion (40), et
- d'un organe de réglage (46) opérant sur la poutre de flexion (40) afin de régler la position de flexion de la poutre de flexion (40) par rapport à l'élément de commande (18) dans la position de repos de celui-ci et afin de conserver et ainsi stabiliser la poutre de flexion (40) dans sa position de flexion réglée lorsque l'élément de commande (18) opère sur l'organe de commutation,
- dans lequel l'organe de réglage (46) comporte une douille taraudée (54) avec un filetage intérieur (56) et une vis de réglage (48) avec une tige filetée (50) dans la réalisation comme vis autotaraudeuse, dans lequel le filetage intérieur (56) de la douille taraudée (54) et le filetage extérieur (52) de la tige filetée (50) de la vis de réglage (48) comportent le même ou sensiblement le même degré d'inclinaison.

2. Dispositif de commande (10) selon la revendication 1, **caractérisé en ce que** la douille taraudée (54) est disposée sur et/ou dans un élément de référence (30) positionné par rapport à la poutre de flexion (40) de l'élément porteur (24) et **en ce que** lors de la rotation de la vis de réglage autotaraudeuse (48) l'extrémité de la tige filetée (50) de celle-ci appuie sur la poutre de flexion (40) et opère sur celle-ci afin de tordre la poutre de flexion (40).

3. Dispositif de commande (10) selon la revendication 2, **caractérisé en ce que** l'extrémité de la vis de réglage autotaraudeuse (48) est réalisée comme courbée de manière convexe et/ou **en ce que** la douille taraudée (54) est maintenue immobile en rotation par complémentarité de formes.

4. Dispositif de commande (10) selon la revendication 1, **caractérisé en ce que** la tige filetée (50) de la vis de réglage autotaraudeuse (48) est maintenue axialement et en rotation sur et/ou dans un élément de référence (30) positionné par rapport à la poutre de flexion (40) de l'élément porteur (24), **en ce que** la douille taraudée (54) est disposée sur et/ou dans une poutre de flexion (40) et **en ce que** la poutre de flexion (40) peut être tordue lors de la rotation de la vis de réglage autotaraudeuse (48).

5. Dispositif de commande (10) selon l'une des revendications 1 à 4, **caractérisé en ce que** le commutateur (32) comporte un organe de commutation (36) déplaçable le long d'un chemin de commutation de l'élément de commande (18) jusqu'à une position de déclenchement du commutateur et **en ce que** la poutre de flexion (40) peut passer dans une position de flexion et être fixée dans cette position de flexion au moyen de la vis de réglage autotaraudeuse (48), le chemin de commutation comportant une longueur pouvant être prédéfinie, et ce avec compensation des tolérances de fabrication et/ou de montage du boîtier (12), de l'élément de commande (18) et du commutateur (32).

6. Dispositif de commande (10) selon l'une des revendications 1 à 5, **caractérisé en ce que** le commutateur (32) comporte au moins deux contacts reliés électriquement l'un à l'autre dans une position de déclenchement du commutateur ou **en ce que** le commutateur (32) est réalisé comme capteur de mouvement fonctionnant de manière optique, capacitive, résistive ou inductive.

7. Dispositif de commande (10) selon l'une des revendications 1 à 6, **caractérisé en ce que** la vis de réglage autotaraudeuse (48) opère sur la poutre de flexion (40) à une position se trouvant dans le prolongement de l'axe de mouvement, traversant le commutateur (32), de l'élément de commande (18) de l'organe de commutation lors de l'actionnement de celui-ci.

8. Dispositif de commande (10) selon l'une des revendications 1 à 7, **caractérisé en ce que** le commutateur (32) est disposé sur la face supérieure (42), tournée vers l'élément de commande (18), de la poutre de flexion (40) et **en ce que** la vis de réglage autotaraudeuse (48) appuie sur la face inférieure (44), se détournant de la face supérieure (42), de la poutre de flexion (40) et en alignement avec le commutateur (32).

9. Dispositif de commande selon l'une des revendications 1 à 8, **caractérisé par** une unité de rétroaction fonctionnant de manière électrique ou électromécanique ou électromagnétique, destinée à fournir un retour tactile d'un actionnement manuel valide de l'élément de commande (18).
